# EUROPEAN PATENT APPLICATION

(11) **EP 2 412 922 A1**
(43) Date of publication of application: **01.02.2012**
(21) Application number: 11174458.7
(22) Date of filing: 19.07.2011
(51) Int. Cl.: F01D 1/04, F01D 5/14

(54) **Low-pressure steam turbine and method for operating thereof**

(30) Priority: 30.07.2010 IT MI20101447
(71) Applicant: Alstom Technology Ltd, 5400 Baden (CH)
(72) Inventor: Haller, Brian Robert, Market Rasen, Lincolnshire LN8 5LQ (GB)

(57) **Abstract**

The invention relates to a multi-stage low-pressure steam turbine (10) and a method for operating thereof. The steam turbine (10) comprises a last stage (18) in which the leading edge (20) of each vane (14) of the last stage (18) is skewed so as to form a W shaped K-distribution across the span (36) of the vanes (14). This shape enables efficient last stage (18) operation at low last stage exit velocities. The invention further includes a method for operating such a steam turbine (10) at a last stage exit velocity between 125 m/s and 150 m/s.

## Description

### TECHNICAL FIELD

The present disclosure relates to low-pressure steam turbines adapted to address the problem of exhaust losses through last stage design.

### BACKGROUND INFORMATION

In the field of low-pressure steam turbines there is an ever-present desire to reduce exhaust losses in order increase turbine net efficiency. One means of achieving this is to increase the efficiency of the last turbine stage.

As described in http://www.powermag.com/issues/cover_stories/The-long-and-short-of-last-stage-blades_483_p3.html (14 July 2010) it is known that above last stage exit velocities of approximately 190 m/s (600 ft/sec) exhaust losses in low-pressure steam turbine increase in a squared relationship with velocity. Although there may seem to be a general benefit in reducing exit velocities, when reduced to below approximately 170 m/s (550ft/sec), net efficiency may decrease due, for example, to the increasing influence of reverse vortices at the blade root. This conclusion is further supported by, for example, K. Kavney et al "Steam turbine 34.5 Inch Low-Pressure Section Upgrades" GE Energy GER-4269 (08/06), who, on page 7, concludes that generally exhaust losses are at their minimum when the exhaust velocity is about 600 ft/s (190m/s).

As described in EP 1260674 (A1) turbine stages may generally be classified as being either impulse or reaction stages depending on the blade root reaction degree. In this context, blade root reaction degree is defined as the ratio of the heat drop (variation of enthalpy) across a moving blade to the total heat drop across a turbine stage. Impulse blade stages, for example, typically have a blade root reaction degree of between 0 to 10 % while for reaction blade stages the blade root reaction degree rises to about 50 %. Typically, stages with blade root degrees of between 10% and 50% are classified as low-reaction type stages. The methods of achieving a particular blade root reaction degree are both varied and well known and can be achieved, for example, by modifying the blades lean or sweep.

Depending on the design of a stage, the blade root reaction degree may influence overall blade efficiency. For example, The US Application Number 20040071544 describes an impulse type stage that has improved efficiency through adaptation of the reaction degree.

### SUMMARY

A low-pressure steam turbine last stage is provided that is capable of overcoming the problem of losses due to reverse vortices resulting from low last stage exit velocity.

The disclosure attempts to address this problem by means of the subject matters of the independent claims. Advantageous embodiments are given in the dependent claims.

The disclosure is based on the general idea of providing a low-pressure steam turbine with last stage vanes that have leading edges skewed so as to form a W shaped K-distribution across the span of each of the vanes. This configuration provides a means to adapt the last stage for efficient operation at low exit velocities.

In aspects, the last stage may be configured as a low reaction stage through a combination of vane14 and blade 12 parameters including the tangential lean angle 30, the tilt angle of the trailing edge in the meridional plane 32 and the vane pitch 26. A reaction degree configuration between impulse type blading and high root reaction i.e. > 50% provides further means of delaying efficiency collapse while operating at low exist velocities.

In a further aspect, a method is provided for operating at low exit velocities between 125 m/s and 150 m/s. This is achieved by adjusting the steam rate through a steam turbine with a configure exit annulus area that has skewed vane leading edges that form a W shaped K-distribution across the span of each vane and preferably has a last stage root reaction degree of between 15%-50%.

Other aspects may further include vanes with straight trailing edges.

Other aspects and advantages of the present disclosure will become apparent from the following description, taken in connection with the accompanying drawing, which by way of example illustrates exemplary embodiments of the present invention.

### BRIEF DESCRIPTION OF THE DRAWINGS

By way of example, an embodiment of the present disclosure is described more fully hereinafter with reference to the accompanying drawings, in which:
Figure 1 is a sectional view of part of an exemplary low-pressure steam turbine;
Figure 2 a and 2b show perspective views of an exemplary last stage vane of the steam turbine of Figure 1;
Figure 3 shows a top view of two last stage vanes of an exemplary vane row of the steam turbine of Figure 2; and
Figure 4 is a graph showing the K-distribution across the span of an exemplary vane.

### DETAILED DESCRIPTION

Exemplary embodiments of the present disclosure are now described with reference to the drawing, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiments disclosed herein.

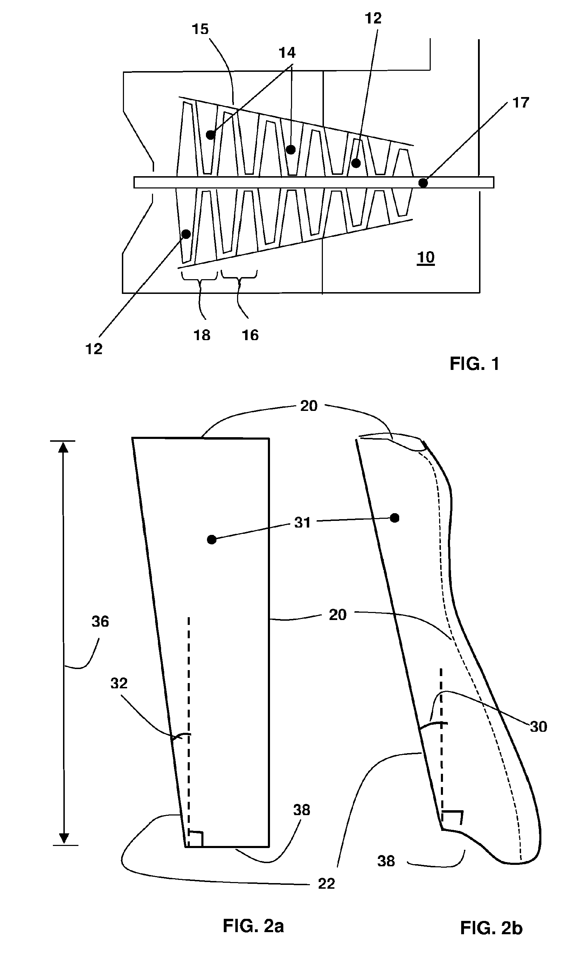

Fig. 1 shows an exemplary low-pressure multiple stage turbine steam turbine 10. Each stage 16 of the low-pressure steam turbine 10 comprises a plurality of stationary vane 14 that are circumferentially distributed on the inner casing 15 to form a vane row and a plurality of blades 12 that are circumferentially mounted and distributed on a rotating rotor 17. The pressure of the steam exiting the last stage 18 of the low-pressure steam turbine 10 defines the steam turbine as a low-pressure steam turbine 10. Typically, at steady state conditions, the last stage 18 exit pressure of a low-pressure steam turbine 10 ranges from atmospheric pressure to a low vacuum.

Immediately downstream of the last stage 18, the inner casing 15 forms an annulus (not shown). The area of the annulus, together with the volumetric flow rate of steam exiting the last stage 18 defines the exit velocity of the steam turbine 10.

As shown in Fig. 2a and 2b, each vane 14 has an airfoil 31 with a leading edge 20 and a span 36 defined as the radially extension between a base 38 and a tip 34 of the airfoil 31. As shown in Fig .3, the distance between adjacent vanes 14 taken from the trailing edge 22 of one of the vanes 14 to the face of a the adjacent vane 14 defines a throat 24 while the distance between leading edges 20 of two adjacent vanes 14 defines the pitch 26. The ratio of the throat to pitch further defines a K- value.

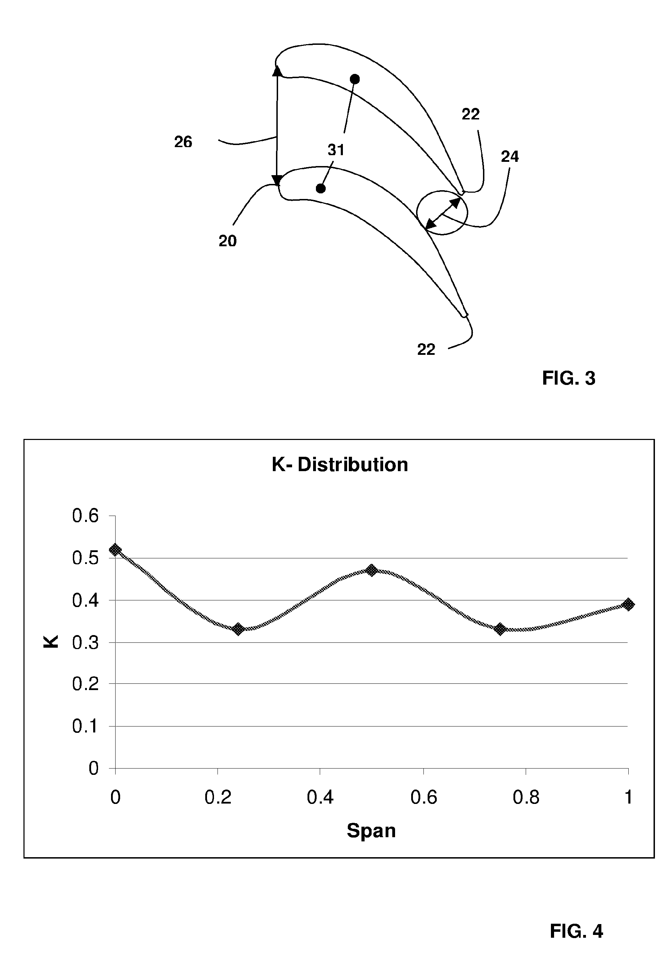

In an exemplary embodiment, the leading edge 20 of each vane 14 is skewed so as to form, as shown in Fig. 2b and Fig. 4, a W shaped K-distribution across the span 36 of the vanes 14.

In an exemplary embodiment, the skewed vanes 14 are configured to have a root reaction degree, in operation, preferably between 15% and 50%, and most preferably between 35% and 45%. As shown in Fig. 2a, in a vane 14 of an exemplary embodiment, the trailing edge 22 has a title angle in the meridional plane 32 and, as shown in Fig 2b, a tangential lean angle 30. The root reaction degree of exemplary embodiments are defined by a combination of vane14 and blade 12 parameters including the tangential lean angle 30, the tilt angle of the trailing edge in the meridional plane 32 and the vane pitch 26.

In an exemplary embodiment, the tangential lean angle 30 is preferably between 16 degrees and 25 degrees and most preferably about 19 degrees.

In an exemplary embodiment, the tilt angle 32 is preferably between 3 degrees and 13 degrees and most preferably about 8 degrees.

In an exemplary embodiment, as shown in Fig 2b, each vane 14 further has a tapering axial width across the span 36.

In an exemplary embodiment, each vane 14 further has a straight trailing edge 22.

Another exemplary embodiment relates to a method for operating a steam turbine 10 of any of the previously described steam turbines 10. The method involves configuring the area of the exit region of the last stage 18 for operation at an exit velocity of between 125 m/s and 150 m/s and adjusting the feed flow rate through the steam turbine 10 such that the exit velocity is between 125 m/s and 150 m/s.

It will be appreciated by those skilled in the art that the present invention can be embodied in other specific embodiments. The presently disclosed embodiments are therefore considered in all respects to be illustrative and not restricted. The scope of the invention is indicated by the appended claims rather than the foregoing description and all changes that come within the meaning and range and equivalences thereof are intended to be embraced therein.

REFERENCE signs
- 10: Low-pressure steam turbine
- 12: Blade
- 14: Vane
- 15: Inner Casing
- 16: Stage
- 17: Rotor
- 18: Last stage
- 20: Leading edge
- 22: Trailing edge
- 24: Throat

- 26: Pitch
- 30: Tangential lean angle
- 31: Airfoil
- 32: Tilt angle in the meridional plane
- 34: Tip
- 36: Span
- 38: Base

## Claims

**1.** A multi-stage low-pressure steam turbine (10) comprising a last stage (18) having:
a plurality of stationary vanes (14) that are circumferentially distributed to form a vane row wherein each vane has an airfoil (31) with a span (36) extending from a radially extending a base (38) to a tip (34) of the airfoil (31);
a plurality of blades (12) that are circumferentially mounted and distributed on a rotating rotor (17) of the steam turbine (10); and
a K ratio defined as the ratio of vane throat (24) to pitch (26),
the steam turbine **characterised by** each of the vanes including a leading edge (20) that is skewed so as to form a W shaped K- distribution across the span (36) of the vanes (14).

**2.** The steam turbine (10) of claim 1 wherein the last stage (18) is configured to have a root reaction, in operation, of between 15% and 50%.

**3.** The steam turbine (10) of claim 3 wherein the root reaction is between 35% and 45%.

**4.** The steam turbine (10) of any one of claims 2 or 3 wherein the airfoil (31) of each vane (14) comprises:
a tangential lean angle (30); and
a trailing edge tilt angle in the meridional plane (32), and
wherein the root reaction degree is defined by a combination of parameters including, the lean angle (30), the tilt angle (32) and the vane pitch (26).

**4.** The steam turbine (10) of claim 4 wherein the tangential lean angle (30) is between 16 degrees and 25 degrees.

**5.** The steam turbine (10) of claim 5 wherein the tangential lean angle (30) is 19 degrees.

**6.** The steam turbine (10) of any one of claims 2 to 4 wherein the tilt angle (32) is between 3 degrees and 13 degrees.

**7.** The steam turbine (10) of claim 6 wherein the tilt angle (32) is 8 degrees.

**8.** The steam turbine (10) of claim 1 or 7 wherein each vane (14) further has a tapering axial width across the span (36).

**9.** The steam turbine (10) of any one of claims 1 to 8 wherein each vane (14) further has a straight trailing edge (22).

**10.** A method for operating a steam turbine (10) comprising:
providing the steam turbine (10) of any one of claims 1 to 9;
configuring the area of the exit region of the last stage (18) for operation at an exit velocity of between 125 m/s and 150 m/s; and
adjusting the feed flow rate through the steam turbine (10) such that the exit velocity is between 125 m/s and 150 m/s.
